# EUROPEAN PATENT SPECIFICATION

(11) **EP 4 081 605 B1**
(45) Date of publication and mention of the grant of the patent: **21.01.2026**
(21) Application number: 20811365.4
(22) Date of filing: 27.11.2020
(51) Int. Cl.: C09J 7/29

(54) **LAMINATE FOR REPAIRING AND/OR PROTECTING AN OBJECT SURFACE AND A METHOD OF PRODUCING THE SAME**
LAMINAT ZUR REPARATUR UND/ODER ZUM SCHUTZ EINER OBJEKTOBERFLÄCHE UND HERSTELLUNGSVERFAHREN DAFÜR
STRATIFIÉ DE RÉPARATION ET/OU DE PROTECTION D'UNE SURFACE D'UN OBJET ET SON PROCÉDÉ DE FABRICATION

(30) Priority: 28.11.2019 EP 19212283
(43) Date of publication of application: 02.11.2022
(73) Proprietor: Recarfix B.V., 2013 GE Haarlem (NL)
(72) Inventor: MICHELSEN, Marc Nicolaas Frederik, 2061 VC Bloemendaal (NL); COADY, Philip Michael, 2341 BS Oegstgeest (NL)
(74) Representative: Hoyng Rokh Monegier B.V.
(86) International application number: PCT/EP2020/083579
(87) International publication number: WO 2021/105324

(56) References cited:
- GB-A- 2 440 609
- US-A- 4 661 182
- US-A1- 2007 036 929

## Description

### FIELD OF THE INVENTION

The invention relates generally to a laminate for repairing and/or protecting an object surface, to a method of producing a laminate for repairing and/or protecting an object surface, a method of applying a laminate to an object surface, a kit of parts comprising such a laminate, and a vehicle having such a laminate applied to it. More particularly the invention concerns application of the laminates to vehicles, in particular automobiles, (motor) bikes, boats and trucks.

### BACKGROUND OF THE INVENTION

Painted object surfaces may commonly be subject to minor or superficial damage, such as scratches and chips. For example, cars, boats, (motor)bikes, home appliances or the like, are often prone to minor damage during use. Cars may experience scratched paintwork due to opening doors, or stone chips on the front of the cars. Similarly, boats, (motor)bikes, scooters and home appliances may experience minor damage that lead to aesthetically displeasing surfaces of the objects, and or exposes underlying substrates to corrosion, such as steel to rusting. Furthermore, these objects may have surfaces that are positioned so as to be particularly prone to damage, e.g. doorsills or door edges on cars. It would be beneficial to pre-emptively protect these areas from damage. Naturally, many other painted objects may benefit from repair and/or protection of their surfaces.

If the paint-work of an object such as e.g., a car, is damaged, usually the car is taken to a body-shop for repair. This often involves repainting an entire body panel, or at least extensive manual labour, which severely drives up the costs. Also, this is a time-costly repair method because the car is taken to a specialist for the repair. Repainting vehicles can also have negative environmental impacts or require expensive clean-up and control. Likewise, damage to other objects often involves extensive repair costs.

Some attempts have been made to provide a tool or a method for repairing an object's damaged surface e.g. scratched paintwork, which omits the use of expensive garage work. In particular, touch-up pens for car body work are known in the art, if not the most common repair form for scratches. For example, EP2683491B1 discloses a coating application device comprising a primer composition comprising an anticorrosion pigment and a paint composition formulated to have a dried colour that is similar to the dried colour of the paint on a vehicle. Repair devices such as touch-up pens, however, have some disadvantages. For example, it is very difficult to apply the paint in a manner sufficiently coherent with the surrounding object surface. That is, unevenness and/or bumps in the surface occur. Moreover, because the applied coating needs time to dry, dirt may be caught in the wet paint as it dries. Particularly, the use of a touch-up pen does not allow for direct use of the car (or other object) immediately after application. The paint first has to dry, otherwise too much dirt will accumulate on the wet paint.

Furthermore, touch-up pens require the user to be in direct contact with the coating in undried form, thereby creating severe limitations to the allowance of material use due to possible toxicity and corrosion of the coating. This leads to limitations of the coating material. Also, since the coating dries (or sets) after application to the object, the colour is very difficult to control. During the drying process (under varying conditions), the colour conformity with the object surface is often not sufficient to obscure the repaired region of the object surface. The above leads to the unsatisfactory situation that the use of touch-up pens often results in poor surface finishing. Finally, the coating from a touch-up pen is only designed for repairing an object surface and is not readily used for protecting damage-prone areas from abrasion. Furthermore, touch-up pens tend to dry out quickly after first use and result in the majority of the product thrown away.

Another attempt to provide a solution to the problem of expensive repair jobs is disclosed in WO2018/004112A1. This document discloses a sticker for repairing flaws such as scratches formed on a surface of vehicles and home appliances. The repair sticker comprises a protective layer, which may be a vinyl or a transparent resin sheet. On this protective layer, a coating layer is applied, optionally with a glass film in between. An adhesive is then applied on the coating layer. Finally, a release paper is provided on the adhesive. When applied to a vehicle, the layers are arranged as a protective layer, a coating layer and an adhesive, from the outside in. The protective layer is provided on the outside of the sticker. This construction is quite thick, offers only a poor finish and may be sensitive to overly rapid discolouration or yellowing when exposed to sunlight, such exposure being typical for automobiles and other objects discussed above.

Furthermore, the stickers are believed to become quickly unsightly due to accumulation of dirt at their peripheral region of the sticker, leading to a highlighting of the presence of the sticker, which may be less acceptable to a vehicle owner than the scratch was.

Furthermore, when the known stickers are cut into shapes, they are either die-cut or blade-cut. However, various disadvantages are coupled with both cutting methods. In particular, die-cutting a sticker is known in the art and occurs with dies having a cutting edge defining a cross-section with a 90° angle. The die is pressed into the sheet with the stickers to define the shapes. The required pressure to cut the stickers is quite high. With a sticker having a high thickness, the tolerances of cutting are also quite large, which prevents any significant issues regarding accuracy. However, as stickers become thinner, these methods often result in manufacturing errors such as cutting the backing paper or not cutting the entire sticker. Both are disadvantageous for the quality of the product.

Furthermore, a die having a cross-sectional cutting edge of 90° will, upon entering the material, displace a portion of material sideways. This material creates a slight bulge in the layer, leading to 1) a high peripheral thickness and 2) delamination along the periphery of the sticker. Both are very disadvantageous to the aesthetic quality of the sticker when applied to the vehicle.

Alternatively, the stickers may be cut with a blade, having a very low cutting edge. This (near-straight) blade will cut the sticker without creating a material bulge on the periphery of the sticker. Also, the pressure needed to cut the material is lower. While the pressure is still relatively high, it is slightly easier to attain certain accuracies with a blade. However, the accuracy is still not always sufficient and the cutting method is very costly. Stickers cut in this manner, also tend to be highly conspicuous , for example, due to dirt accumulation at the periphery when applied, or may be even be readily perceptible by touch.

Car repair stickers are, for example, available commercially from www.colorxlabs.com and www.autostickeroriginal.co.uk; and have previously been marketed under the name Stickerfix, however, these products are believed to suffer at least some of the problems discussed above.

There is thus a general and ongoing need to improve methods and tools for repairing and/or protecting an object surface. In particular, there is a need for a laminate that is durable, has colour conformity with the object surface, and is not readily distinguishable from the object surface when applied thereto.

Presently, solutions for repairing and/or protecting an object surface lack durability and are conspicuous on the object surface once applied. This has led to limited interest by users, and a continued non-repair of objects (possibly leading to early corrosion) or the use of environmentally unfriendly paint respraying. Also, the state of the art does not provide adequate options for swift and safe application of such a solution.

Thus, there is a particular need for laminate for repairing and/or protecting an object surface that solves at least one of the abovementioned problems.

US 2007/036929A1 discusses a thin film applique having a polymer film with first and second sides. A pattern layer has first and second sides, and the first side of the polymer film and the first side of the pattern layer are positioned adjacent each other. A pressure-sensitive adhesive underlies one of the second side of the pattern layer and the second side of the polymer film. A clearcoat covers one of the second side of the polymer film and the second side of the pattern layer that is not overlying the pressure-sensitive adhesive. US4661182A discusses a paint damage repair device that has a transparent polymeric film base, a paint coating on the surface of the film base, and an adhesive on the paint coated film base. GB2440609A discusses kit using a coloured vinyl sheet that has an adhesive applied to the back. The self adhesive paint is said to stick onto paint, and thereby repair it.

### BRIEF SUMMARY OF THE INVENTION

In one aspect of the invention there is provided a laminate for repairing and/or protecting a surface of an object, in accordance with the claims. In a preferred embodiment, the polymer film has a thickness of about 40 microns or less. In a more preferable embodiment, the polymer film has a thickness of about 30 microns.

The laminate for repairing and/or protecting an object surface can be easily and quickly applied, and does not require extended drying times when applied to an object surface. Additionally, it is easily useable because the paint is applied to the laminate prior to the application of the laminate to the object surface. As a result, the user is not required to handle paint, making the application process tidy and less prone to damage and toxicity.

The polymer film, comprising the paint coating thereon, may also protect the object surface from damage, particularly at locations on the object surface that are prone to damage but also require an aesthetically pleasing finish, such as doorsills or door edges. Known methods of repairing or protecting a location on an object surface from damage may be disadvantageous since they are aesthetically unpleasing (e.g., rubber strips, brush marks or visible stickers). The provision of a laminate having an aesthetically advantageous finish thus solves this problem by protecting the damage-prone location without influencing the aesthetics of the location. In a particularly advantageous embodiment of the invention, the polymer film is a high gloss clear conformable UV stable cast vinyl.

Additionally, the laminate protects the object surface from corrosion, in case of exposed substrate material, such as underlying metal (steel). This is achieved by sealing the exposed material from the atmosphere. The laminate may thus repair damage to the object surface and simultaneously protect the object surface from damage or further damage. The laminate can bind to the object surface via the adhesive immediately upon application, meaning that moderate stress on the laminate can be applied (e.g. driving on the highway) without the laminate peeling off or with the laminate having any other disadvantageous defects. Furthermore, the adhesive fully activates within 48 hours, thereby increasing its resistance against severe stresses (e.g. car washing machines). The adhesive preferably comprises an acrylic adhesive.

The object surface may be the surface of a vehicle, preferably an external surface of a vehicle. Alternatively the object surface may be the surface of a boat, a train, furniture, home appliances, or any other surface that requires protection from damages or any surface that requires repair. The laminate may be provided on a carrier substrate. In particular, before use, to protect the adhesive, the laminate is provided on such a carrier substrate.

In an embodiment, the paint coating has a coating thickness of less than about 120 microns, preferably of less than about 80 microns, more preferably of between about 60 microns and about 80 microns. A minimal thickness of the paint coating ensures a thin laminate, thereby improving the visual appearance of the laminate to ensure it cannot readily be seen upon application.

In an embodiment, paint coating comprises at least an inner paint layer paint and an outer clearcoat layer. In this embodiment, the inner paint layer is coloured in such a manner that it closely conforms to the object surface to which the laminate is applied. The paint layer may comprise any of the commonly known automotive paints.

The inner paint layer may be provided with an outer clearcoat layer over the inner paint layer. The outer clearcoat layer is intended to provide a degree of protection and/or gloss to the inner paint layer.

In a preferred embodiment, the outer clearcoat layer is a UV blocking layer, which entails the layer providing stability under UV radiation, preventing or reducing discoloration of the laminate. As a result, discolouration of the laminate is limited, leading to high durability. While the outer clearcoat layer protects the inner paint layer, it does not affect the visual appearance of the inner paint layer since it is transparent. That is, the optical characteristics are not significantly affected, thereby ensuring protection of the inner pain layer without providing disadvantageous optical effects. As a result, the laminate may be in close colour conformity with the object surface to which the laminate may be applied. Furthermore, the outer clearcoat layer provides additional protection to the inner paint layer of the paint coating. The outer clearcoat ensures that the visual appearance of the inner paint layer does not change when small deformations occur in the outer clearcoat layer, thereby adding to the durability of the laminate.

The outer clearcoat layer comprises a substantially colourless resin and is substantially devoid of inks and/or pigments. The outer clearcoat layer preferably comprises a resin selected from the group consisting of urethane, acrylic and mixtures thereof. Clearcoats are well known in the automotive industry. The clearcoat of the present invention may be any commonly known clearcoat used in the automotive industry.

In an embodiment the inner paint layer comprises a resin selected from the group consisting of epoxy, acrylic, urethane, alkyd, and mixtures thereof.; more preferably an acrylic resin or a urethane resin. In an embodiment, the inner paint layer comprises a pigment.

In an embodiment, the paint coating thickness has deviations measured from a mean thickness of less than about 30 microns, preferably less than about 20 microns, more preferably less than about 10 microns, still more preferably less than about 5 microns.

Since the thickness of the paint coating is very low, the total laminate thickness is low as well. This is advantageous for the conformity of the laminate with the object surface to which it may be applied. This means that a high degree of accuracy is required for the thickness of the paint coating. Deviations in the thickness of the paint coating of the laminate may lead to a degree of surface roughness, which is disadvantageous from an aesthetic point of view. Automobiles are typically given a high gloss finish, and it is advantageous if the laminate also has a high gloss exterior surface. In an alternative embodiment, the laminate has matt version, in particular if this is in accordance with the object surface.

In an embodiment, the adhesive is an acrylic adhesive, preferably a permanent acrylic adhesive. The thickness of the adhesive decreases as the adhesive sets after application to a surface. As the solvent in the acrylic layer dissipates, the thickness reduces. The acrylic may also allow the laminate to be removed from a surface on which it has been applied, this may be done for example by heating the laminate and peeling the laminate off.

In an embodiment, the polymer film has a tensile strength of at least about 0.3 kg/cm, preferably of at least about 0.6 kg/cm, more preferably of at least about 1.1 kg/cm. These tensile strength of the polymer film translates directly to the durability of the laminate, consistency of production, and ease of application. Additionally, a high tensile strength ensures that the process of applying the paint coating to the laminate and subsequently die-cutting the laminate happens at a higher precision. In particular, resistance to plastic deformation of the laminate ensures that the surface of the laminate is kept substantially equal before and after die-cutting. Having a high tensile strength advantageously keeps the surface of the laminate free from deformations during the application of the laminate to an object surface. The laminate is thus less prone to buckling or folding as a result of plastic deformation.

The tensile strength of the polymer film is determined through standard measurement methods, in this case DIN 53455. It shall be appreciated that other methods of determining the characteristics of the polymer film may also be used and a determination of tensile strengths through other measurement methods will still fall within the scope of the present disclosure.

In accordance with the invention, the laminate comprises a peripheral edge, wherein the peripheral edge comprises a facet angled from the front surface at an angle of from about 85° to about 20°, preferably from about 80° to about 40°, more preferably from about 75° to about 55°.

An angled facet defines an edge of the laminate which is less acute than a straight edge. As a result, it is more effectively disguised on the object surface after application. It is also more difficult to feel the laminate on the object surface, since the angled facet leads to a smoother transition between laminate and object surface. This leads to a surface finish that more closely conforms to the original appearance of the object surface prior to the application of the laminate. Additionally, the angled facet limits the accumulation of dirt behind on the periphery of the laminate, thereby advantageously reducing the visibility of the laminate on the object surface.

In an embodiment, the laminate comprises a peripheral edge, having a peripheral thickness, said peripheral thickness being greater than a more central thickness of a central part of the laminate, wherein preferably said peripheral thickness is at most about 30% greater, more preferably at most about 20% greater, even more preferably at most about 10% greater than the central thickness.

When a laminate is die-cut, the cross-sectional width of the die, displaces material of the laminate laterally away from the cutting edge. The angle, defined by the cross-section of the die, along with the depth to which the die enters the laminate, determines the degree of material displacement. Having a 'wide' die will displace the material to a relatively large degree, causing a higher peripheral thickness, due to the accumulation of laminate material. A greater peripheral thickness results in optical problems of the laminate, since the 'bulge' of the thickened periphery is visible. The greater thickness can also be felt when running a finger over the laminate. Also, a greater thickness of the laminate periphery may result in delamination of the polymer film from the carrier substrate, this could result in premature drying of the adhesive. A greater peripheral thickness is thus disadvantageous because of increased visibility and dirt and debris accumulation.

On the other hand, cutting the laminate with a thin blade causes almost no displacement of laminate material, thereby creating a laminate absent the abovementioned thickened periphery. However, cutting the laminate with a blade (with a very low cross-sectional width, and thus a small angle), results in a facet angle of the laminate which is too great. A large facet angle of the laminate results in the laminate having a sharp edge when applied to an object surface. This edge is visible, may be felt, and may accumulate dirt, thereby even more clearly outlining the periphery of the laminate. Having an 90° or even acute edge along the periphery of the laminate is thus very disadvantageous.

Both a higher peripheral thickness and a higher facet angle result in discontinuities on the surface to which the laminate is applied, which is disadvantageous to the use of the laminate.

The present invention solves the above issues by changing the cross-sectional angle of the die. This results in a facet angle that is not too sharp to be felt or accumulate dirt while the periphery thickness is also limited so that the disadvantageous aesthetic effects of a great periphery thickness are also limited.

In a preferred embodiment, the polymer film has a thickness of less than about 45 microns, preferably of less than about 40 microns, more preferably of less than about 35 microns, still more preferably of about 30 microns. Having a polymer film that is particularly thin helps reduce the total laminate thickness, thereby adding to the conformity of the laminate to the surface to which it is applied. The thinner the laminate is, the better it is disguised on the surface of an object.

The polymer film may be made from a variety of materials that can receive a paint coating thereon, for the application of the present invention.

Exemplary materials for the polymer film include, without limitation, polyethylene (homopolymers, such as low density polyethylene (LDPE) and high density polyethylene (HDPE); and copolymers, such as ionomers, EVA, EMA, ethylene/alpha-olefin copolymers), polypropylene (homopolymers and copolymers, such as propylene/ethylene copolymer), polylactic acid, polyethylene terephthalate, polyethylene furanoate, polyester, nylon, vinyls, polyvinyl chloride, polystyrenes, polyamides, polycarbonates, polyurethanes, and the like.

Preferably, the polymer film comprises vinyl or polyurethane.

The film may be plasticized with plasticizers to enhance conformability, for example to curved surfaces.

A preferred material for the polymer film is vinyl. A most preferred material is a (plasticized-) polyvinyl chloride (PVC) film.

Halogen free vinyl films may also be used. Examples include vinyl acetates (homopolymers, copolymers or a mixture thereof), or a mixture of an acrylic polymer with a vinyl acetate/ethylene polymer and/or a polyurethane containing polymer.

The polymer film may be made by any known casting or extrusion process. by melting the component polymer(s) and extruding, coextruding, or extrusion-coating them through one or more flat or annular dies.

Further exemplary materials may be sustainable, bio-sourced, recycled, recyclable, and/or biodegradable materials. For example, low density polyethylene (LDPE), which can be recycled into LDPE resin pellets, and then used to form new products, saving energy and mineral oil resources. As used herein, the prefix "bio-" is used to designate a material that has been derived from a renewable resource. Nonlimiting examples of renewable resources include plants (e.g., sugar cane, beets, corn, potatoes, citrus fruit, woody plants, lignocellulosics, hemicellulosics, cellulosic waste), animals, fish, bacteria, fungi, and forestry products. Natural resources such as crude oil, coal, natural gas, and peat are not renewable resources.

Nonlimiting examples of renewable polymers include polymers directly produced from organisms, such as polyhydroxyalkanoates and bacterial cellulose; polymers extracted from plants and biomass, such as polysaccharides and derivatives thereof (e.g., gums, cellulose, cellulose esters, chitin, chitosan, starch, chemically modified starch), proteins (e.g., zein, whey, gluten, collagen), lipids, lignins, and natural rubber; and current polymers derived from naturally sourced monomers and derivatives, such as bio-polyethylene, bio-polypropylene, polytrimethylene terephthalate, polylactic acid, NYLON 11, alkyd resins, succinic acid-based polyesters, and bio-polyethylene terephthalate. The polymer film of the laminate may comprise mixtures of different polymers, including mixtures of polymers from both renewable and non-renewable resources.

In a particularly advantageous embodiment, the laminate is non-hazardous. The adhesion preferably reaches a rating of at least 8 when measured with ASTM D3359. The laminate preferably has a durability to withstand vertical exposure for at least 5 years, preferably 7 years. In a preferred embodiment, the laminate withstands light exposure under ISO-4892-2. In a preferred embodiment, the laminate is self-extinguishing to advantageously provide good flammability characteristics.

In another aspect of the present invention there is provided a method of producing a laminate for repairing and/or protecting a surface of an object, in accordance with the claims.

After the application, and preferably also after curing and drying, of the paint coating to the polymer film, the laminate is die-cut into a variety of shapes which correspond to the most common small scratches on the object surface. The shapes defined by die-cutting the laminate may be round, ovoid, rectangular, square, or any other appropriate shape. The corners may be rounded to provide a smoother finish and conformity with the object surface. The angle of the die-cut means that the outer edge of the product is so smooth, no dust and grit can accumulate there which manifestly improves the camouflage qualities of the laminate.

In an embodiment, the step of applying the paint coating comprises spray coating the paint , preferably while a normal vector of the polymer film defines an angle with respect to the direction of gravity of between about 10° and 80°, more preferably at an angle of between about 20° and 50°, even more preferably at an angle of between about 30° and 40°.

The paint technology is sprayed on the polymer film. Accurate and consistent colour development is dependent upon the application method. The paint layer thickness is readily controlled through spraying. Having a low degree of variation due to spraying the material, as opposed to rolled application, increases colour consistency of the paint coating, and achieves a thinner layer.

Particularly, the paint coating is applied to the polymer film by spraying the paint coating under an angle. This is to improve the colour conformity between the laminate and the object surface. Object surfaces are usually painted under different angles with respect to gravity. For example, the roof of a car is substantially perpendicular to the direction of gravity while the doors are substantially parallel to the direction of gravity. The resulting colours vary slightly, due to the forces on the paint while drying. As a result, the laminate should have a colour which is in conformity with both the roof and the doors of the car. The same applies to other objects such as e.g. bikes, boats, home appliances, etc.

To achieve this, the paint coating is applied to the front surface of the polymer film with the polymer film positioned under an angle between 0° and 90°. This advantageously provides an average colour consistency between surfaces that are completely perpendicular to the direction of gravity and surfaces that are parallel to the direction of gravity, thereby increasing the colour conformity between the laminate and the object surface.

Alternatively or additionally, a spraying nozzle, used to spray the inner paint layer on the polymer film, may be directed at the polymer film under an angle. Specifically, the angle between the spraying nozzle and the normal defined by the polymer film may be at an angle of between about 10° and 80°, more preferably at an angle of between about 20° and 50°, even more preferably at an angle of between about 30° and 40°.

In an embodiment, the polymer film has a thickness of less than about 50 microns, preferably of less than about 40 microns, more preferably of less than about 35 microns. Having a thin polymer film reduces the overall thickness of the laminate, leading to a close conformity between the laminate and the surface to which it is applied.

In an accordance with the invention, the step of die-cutting the polymer film is performed using a die having a cross-sectional area defining a cutting angle from about 50° to about 85°, preferably from about 60° to about 80°, more preferably from about 65° to about 75°, even more preferably of about 70°. Using such a die limited increase in peripheral thickness while simultaneously providing a smooth or ramped edge.

In an embodiment, the step of die-cutting the polymer film is performed by feeding the polymer film past a roller, the roller having a die-sheet disposed around it, wherein the die sheet comprises protrusions thereon, defining the shapes to be cut into the laminate.

Since the laminate is thin, die-cutting the laminate is preferably not performed with a conventional press-die. The forces required to penetrate the laminate, but not the carrier substrate, would be very high. As a result, the accuracy of the press decreases. The use of a die-sheet, disposed around a roller, allows the laminate to be touched by the die along only one line at a time. This line-load on the laminate ensures a high accuracy can be maintained since the forced required to enter the laminate along a single line, as opposed to the entire die, is much lower.

Alternatively, the laminate may be cut by utilizing a die having an elongated cutting edge. The cutting edge defines a plane. Perpendicular to the plane, a centreline is defined by the shape of the elongated cutting edge of the die. The die is placed onto the laminate under an angle, such that the cutting edge touches the laminate only at one point. The die is then moved in a circular fashion. At all times, the die touches the laminate only at a single point. The centreline defines a cone during its movement.

In an embodiment, the method of producing a laminate further comprises the step of curing the paint coating with the adhesive pre-added. Curing the laminate with the adhesive pre-added ensures a constant surface finish may be achieved, which is highly controllable. As a result, a close colour conformity is achieved with the surface of the object to which the laminate is applied.

In another aspect of the present invention there is provided a method of applying a laminate to the surface of an object, comprising the steps of: providing a laminate in accordance with any of the embodiments described hereinabove; and applying the rear surface with adhesive to the object surface.

In an embodiment, the laminate is applied to a damaged area of the object surface.

In an embodiment, the colour of the laminate and the colour of the object surface have a ΔE*_{CMC} difference of no more than about 1.8, preferably of no more than about 1.2, more preferably of no more than about 0.6.

In an embodiment, the colour of the laminate and the colour of the object surface have a ΔE*_{WADE} (the weighted average delta E) difference of no more than about 2.8, preferably of no more than about 2.0, more preferably of no more than about 1.4.

The colour conformity between the laminate and the object surface is measured using DIN6175:2019-07. This standard describes a method for assessing colour differences of high-gloss plain and effect colours. In particular, this standard can be used to determine tolerances for the acceptance of paint batches, coated surfaces of vehicles and add/on parts, and repair coatings on vehicles and add-on parts. For visually identifiable colour variations, the calculated colour difference from the test can be used as a guideline for assessors and for repair coatings. Advantageously, this standard provides a measurement technique for solid and effect coatings, thereby eliminating the need for two separate measurement techniques and increasing the achieved conformity of the laminate with the surface to which it is applied. Particularly in the case of effect finishes, the visual impression is additionally determined by the distribution and orientation of the effect particles in the paint layer.

Alternatively, the colour conformity between the laminate and the object surface is measured using the ASTM E2539 - 14(2017) standard. This test method is designed to provide colour data obtained from spectral reflectance factors at specific illumination and detection angles for interference pigments. The ASTM E2539 - 14(2017) test sets out what the instrumental requirements and required parameters are, needed to make instrumental colour measurements of thin film interference pigments. The test method is designed to encompass interference pigments used in architectural applications, automobiles, coatings, cosmetics, inks, packaging, paints, plastics, printing, security, and other applications.

The characterization of optical behaviour of the laminate and the object requires measurement at multiple angles of illumination and detection. The measurement results are usually expressed as reflectance factors, tristimulus colour values, or as CIE L*a*b* colour coordinates and colour difference.

The gonio-apparent effect depends strongly on the physical and chemical properties of the medium. E.g., the visual effects under different incident angles differs based on the properties of the medium. Some of the properties affecting colour and colour appearance include vehicle viscosity, thickness, transparency, and volume solids. As a general rule, for quality control purposes, interference pigments are best evaluated in a masstone product form. In some cases this product form may be the final product form, or more typically a qualified simulation of the intended product form (such as a paint drawdown) that in terms of colour and appearance correlates to final product application.

Measurements of the optical characteristics of materials containing metal flake pigments are described in Test Method E2194 - 14(2017). This test method is designed to provide colour data at specific measurement angles that can be utilized for quality control, colour matching, and formulating in the characterization of metal flake pigmented materials. The test method provides meaningful colour information for metal flake pigmented materials.

While the above describes certain preferred test methods, it shall be understood that other measurement methods may also be utilized to ensure a sufficient colour conformity between the object surface and the laminate wherein tolerances equivalent to the abovementioned tolerances should be adhered to.

In an embodiment, an initial adhesive strength between the polymer film and the object surface is at least about 300 N/m, preferably of at least about 400 N/m, more preferably of at least about 500 N/m, said initial adhesive strength being measured at about 20 minutes after application.

The adhesion strength of the adhesive is determined on ASTM 1000, stainless steel. A high adhesive strength is of particular importance for object surfaces that have to withstand high stresses, for example external surfaces of a car. On a car, the high speeds and influences of weather or car washing machines require a high adhesive strength, which is achieved by the present disclosure. The adhesive strength of the laminate shortly after its application to the object surface is determinative of the ease with which the laminate may be used. By providing a laminate having a high initial adhesive strength, the laminate may be applied to the object surface and immediately exposed to normal conditions, such as wind past a car at high speed.

In an embodiment, the ultimate adhesive strength of the polymer film to the object surface is at least about 400 N/m, preferably of at least about 500 N/m, more preferably of at least about 600 N/m, said ultimate adhesive strength of the polymer being measured at about 24 hours after application.

Since the adhesive provides an increased adhesive strength after a period of about 24 hours, the ultimate adhesive strength is determinative for the durability of the laminate and should withstand day-to-day use of the object surface, e.g., a car wash or weather.

In another aspect of the invention, there is provided a kit comprising: a carrier-substrate, preferably a polymer-film backing; and one or more laminates in accordance with any of the embodiments described hereinabove, releasably held upon the substrate. The carrier-substrate may be a polyester film, preferably a PET (polyethylene terephthalate) film, preferably of about 50 microns thick.

In an embodiment, an array of laminates in accordance with any of the embodiments described hereinabove is releasably held upon the substrate, wherein preferably at least two of the laminates differ in size and/or shape.

Having different shapes of laminates disposed on the substrate allows a user to select a shape which covers the damage on the surface. Alternatively, the user can select a shape which is particularly suited for a region of the surface that is to be protected. E.g., longitudinal strips to wrap around the edge of a door.

In another aspect of the present invention, there is provided a vehicle, preferably an automobile, comprising: a surface, preferably an external surface, more preferably an external, painted surface; and a laminate in accordance with any of the embodiments described hereinabove adhered the surface, even more preferably wherein the laminate extends across an irregularity in the surface.

### BRIEF DESCRIPTION OF THE DRAWINGS

The features and advantages of the invention will be appreciated upon reference to the following drawings, in which:
FIG. 1 is a cross-sectional view of an embodiment of the laminate;
FIG. 2 is a cross-sectional view of the laminate being cut with a blade in accordance with known cutting techniques;
FIG. 3 is a cross-sectional view of the laminate being cut with a 90° die in accordance with known cutting techniques;
FIG. 4 is a cross-sectional view of the laminate being cut with a die in accordance with the present invention;
FIG. 5 a flow chart illustrating a method for producing a laminate for repairing and/or protecting an object surface; and
FIG. 6 is a side view of a car having a scratch and a cross-sectional view of a laminate disposed on the surface of said car.
FIG. 7 is a plan view of a kit comprising a carrier substrate and a number of laminates releasably held on the carrier substrate.

### DESCRIPTION OF ILLUSTRATIVE EMBODIMENTS

The following is a description of certain embodiments of the invention, given by way of example only and with reference to the drawings.

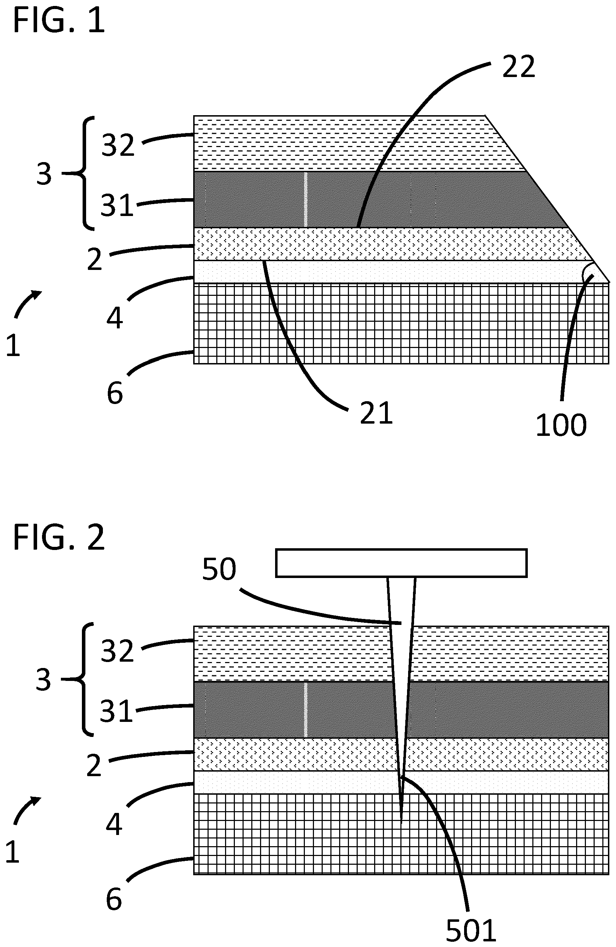

Referring to FIG. 1, a cross-sectional view of a laminate 1 for repairing and/or protecting an object surface is shown. The laminate comprises a polymer film 2. Said polymer film 2 comprises a rear surface 21 and a front surface 22. On the rear surface 21, an adhesive 4 is provided as an applied layer. On the front surface 22, a paint coating 3 is provided. In the shown embodiment, the paint coating 3 comprises a inner paint layer 31 and an outer clearcoat layer 32. The inner paint layer 31 comprises pigment, leading to the coloration of the laminate 1. The outer clearcoat layer 32 provides a degree of protection to the inner paint layer 31, for example, preventing or reducing discolouration and/or preventing or reducing damage to the inner paint layer 31.

The paint coating 3 inner paint layer 31 and/or outer clearcoat layer 32 are preferably spray-coated onto to the polymer film 2. The paint coating layer 3 may preferably be in direct contact with the polymer film 2. Alternatively, an intermediary layer of, for example, primer may be provided.

Preferably the polymer film 2 is a single layer (as shown), however, it may also comprise multiple layers of various polymers.

The laminate 1 is provided on a carrier substrate 6 in the shown embodiment, which acts as a removable backing. The laminate 1 is removed from the carrier substrate 6 prior to application of the laminate 1 to an object surface.

The embodiment shown in FIG. 1 has a facet angle 100 of about 55°. This facet angle 100 will be described hereinafter with reference to the figures related to kiss-cutting.

The laminate 1 having a facet angle 100 of about 55° is a particularly advantageous embodiment, providing a ramped edge without having thickened peripheries. For clarity, the left side of FIG. 1 is illustrated with a 90° facet angle for ease of identifying the different layers. It shall be understood that a periphery having a facet angle 100 may be provided around the part of, but preferably the full periphery of the laminate. The facet angle 100 of 55° is in accordance with a die cutting angle 501 of about 70°, as will be further explained with reference to figures 2-4. While a facet angle 100 of about 55° is shown, and is most preferred, facet angles ranging from 40° to 70°, or more specifically from 50° to 60° may also be useful

A laminate 1 may be produced as an extended sheet of material on a continuous backing layer 6. That extended layer may be provided with severed areas or zones to create pre-shaped patches for removal and application to commonly sized scratches, for example as a sheet of stickers. This can be done, for example by cutting, preferably die-cutting the laminate layer 1 on a continuous carrier substrate 6.

FIG. 2-4 show various configurations illustrating cutting of a laminate 1, in particular kiss-cutting the laminate.

Kiss-cutting refers to a cutting action, preferably die-cutting, in which a cut passes fully through the thickness of the laminate 1 and not into, or only partially into, the backing 6.

Kiss-cutting the laminate 1 is creates a severed edge around a part of the laminate 1 so that the laminate 1 attains a certain predetermined shape and so that the laminate 1 is readily removable from the carrier-substrate 6.

Kiss-cutting is difficult to perform accurately for thin materials because the tolerances for kiss-cutting are generally low. In particular, the tolerances are dependent on the thickness of the laminate 1 and the carrier substrate 6. When kiss-cutting a sheet of laminate 1 to make smaller shapes, the pressure applied to the blade 50 or die 51, 5 is dependent on the size of the die, the cutting angle of the die, the resilience of the material, and the thickness of the material. The goal of kiss-cutting the laminate 1 is to penetrate the carrier substrate 6 slightly, so that the laminate is fully cut, but not to cut the carrier substrate 6 too deeply (e.g., all the way through or so deep that it might loses structural integrity).

FIG. 2 shows a similar cross-sectional view of the laminate 1 as FIG. 1, wherein the laminate 1 is cut using a blade 50 having a small cutting angle 501. The use of a thin blade 50 to cut the laminate 1 is a conventional method as described hereinbefore. The thin blade 50 enters the laminate 1 with a lower amount of pressure, due to the lowered amount of material that needs to be displaced by the blade 50, when compared to a conventional die-cutting tool. The low cutting angle 501 leads to a lower cutting force, allowing for a slight increase in cutting accuracy when compared to conventional die-cutting tools. As shown in FIG. 2, the laminate 1, after being cut, has a sharp angle on its periphery, leading to the accumulation of dirt and debris. Further, the acute edge will be felt and seen by a user after application of the laminate 1 on an object surface.

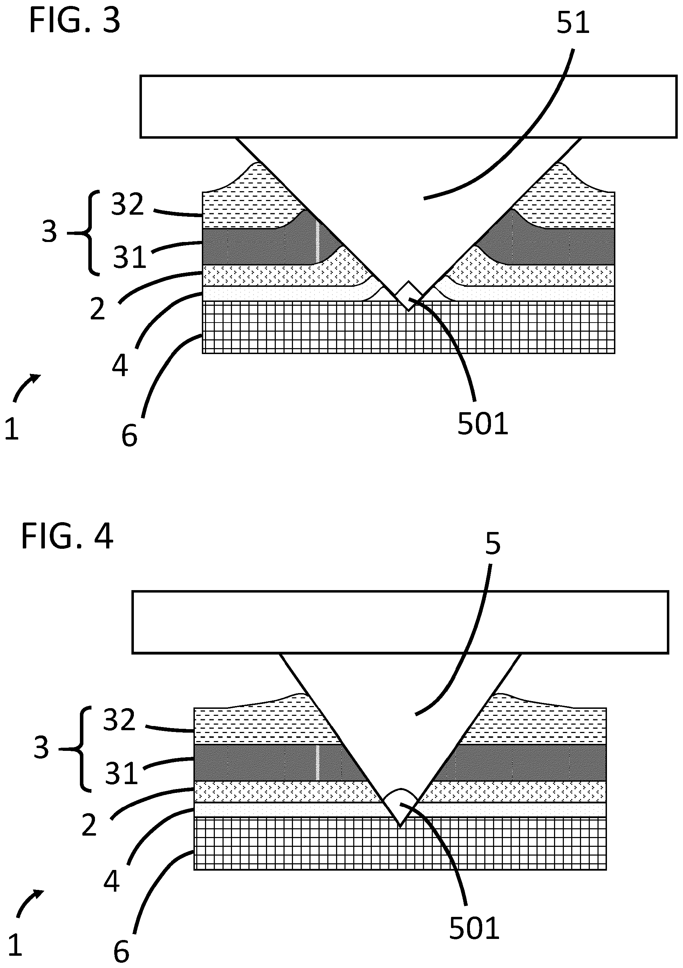

FIG. 3 shows yet another cross-sectional view of the laminate 1, wherein the laminate 1 is being cut with a conventional die-cutting tool 51, having a cutting angle 501 of 90°. As shown in FIG. 3, the use of a conventional die-cutting tool 51 leads to significant problems with regards to the quality of the laminate 1. First, the material adjacent to the die deforms, creating a bulge. Once the die is retrieved from the material and the laminate 1 is removed from its carrier substrate 6, these bulges are still present in the laminate 1. Once applied to an object surface, these bulges are visible and lead to an increased accumulation of dirt behind its periphery.

Second, the lateral pressure on the laminate can lead to partial delamination of the laminate 1. As seen in the shown figure, the adhesive 4 may start to delaminate due to the high lateral pressure on the laminate 1. Dependent on the strength level between the layers, other parts of the laminate 1 may start delaminating as well. As a result, the edge of the laminate 1, after cutting, is bulged and partly delaminated, thereby reducing the aesthetic effects of the laminate 1. In particular, these effects are very disadvantageous to the application of a laminate 1 on a surface where the aim is not to see the laminate 1 on the object surface.

FIG. 4 shows an embodiment of the present invention wherein the laminate 1 is cut with a die 5 having an cross-sectional shape defining a cutting edge and having a cutting angle 501. In the shown embodiment, the cutting angle 501 of the die 5 is about 70°. Having a reduced cutting angle 501 with respect to the conventional die 51 of FIG. 3 results in a limitation of bulging and delamination as shown in FIG. 4. In particular, the shown embodiment of the invention shows a die-cutting technique wherein the bulge on the side of the laminate 1 is significantly reduced. Also, the delamination at the periphery of the laminate 1 is reduced significantly. As a result, the embodiment shown in FIG. 4 of the drawings solves the problems associated with blade-cutting the laminate 1 and with die-cutting the laminate 1 using conventional die-cutting techniques.

Particularly, the product resulting from the die-cutting step shown in FIG. 4 advantageously provides a laminate 1 having a peripheral edge in a thickness of the laminate 1, wherein the peripheral edge comprises a facet with an angle of about 70°. This angle ensures that the edge of the laminate 1 when applied to the object surface is smoothed. As a result, less dirt will accumulate behind the edge, the edge will be less visible, and the edge will be more difficult to be felt. Also, providing a laminate with an facet angle of about 70° provides a laminate 1 with substantially no delamination on the periphery, contrary to what was described in FIG. 3. Further, the angle of about 70° also ensures a limitation of bulge. I.e., the level of peripheral thickness is decreased with reference to conventional die-cutting techniques. The embodiment of the invention shown in FIG. 4 thus results in a laminate 1 having a peripheral edge defining an angled facet of about 70°, without having a disadvantageous thickened peripheral edge. It is thus preferred to both conventional cutting methods. It does not define a sharp peripheral edge, as does the blade cutting technique, and it does not have delamination and bulging, as does the conventional die-cutting technique.

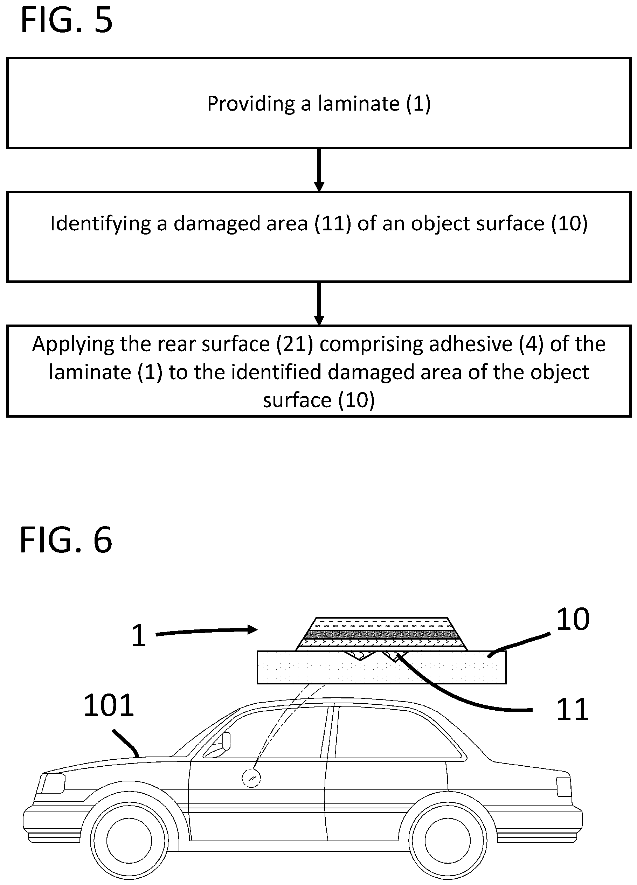

FIG. 6 shows an embodiment of the invention applied to a car 101. In particular, the car 101 has a two small scratches 11 on its door, having an object surface 10 (in this case the door surface). The object surface 10 is shown in FIG. 6 having two scratches 11 running through it. The laminate 1 is provided over the two scratches 11 to cover them. As shown, the laminate 1 has an angled periphery, with an angle of about 70° to the object surface. The reparative laminate 1 may be applied in accordance with the process of FIG. 5.

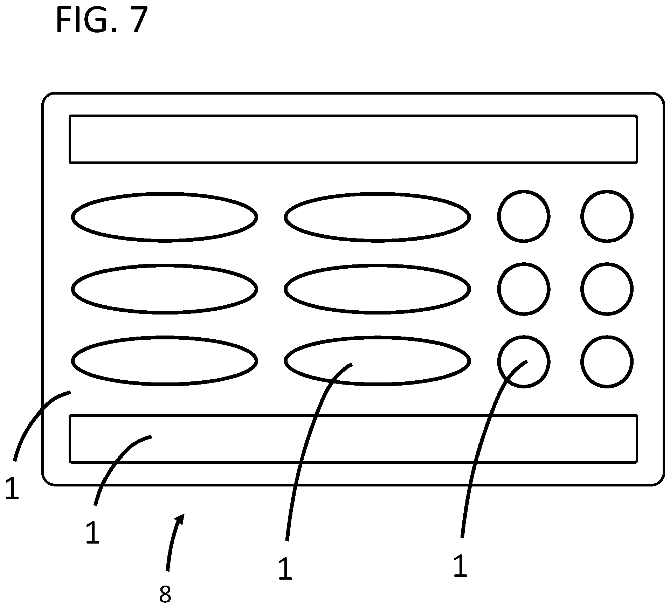

FIG. 7 shows an aspect of the present disclosure wherein a kit 8 is provided, comprising a carrier substrate and several laminates 1 disposed on said carrier substrate 6. The laminate 1 may be in accordance with any of the embodiments described hereinabove. The laminate 1 may be produced as an extended sheet of material on a continuous backing layer 6. The extended layer may be provided with severed areas or zones to create pre-shaped patches for removal and application to commonly sized scratches, for example as a sheet of stickers. This can be done, for example by cutting, preferably die-cutting the laminate layer 1 on a continuous carrier substrate 6. In an embodiment, kits 8 may be produced from a larger sheet of laminate, wherein the laminate 1 regions are kiss-cut and the kits 8 are completely severed. The result is a number of kits 8 having kiss-cut laminate shapes provided on the carrier substrate.

Thus, the invention has been described by reference to certain embodiments discussed above. It will be recognized that these embodiments are susceptible to various modifications and alternative forms well known to those of skill in the art.

## Claims

1. A laminate (1) for repairing and/or protecting a surface (10) of an object (10), comprising:
a polymer film (2) having a rear surface (21) and a front surface (22), wherein
the rear surface (21) is provided with adhesive (4); and
the front surface (22) is provided with a paint coating (3) ;
wherein the polymer film (2) has a film thickness of less than 50 microns;
**characterized in that** the laminate (1) comprises a peripheral edge, wherein the peripheral edge comprises a facet angled from the front surface (22) at an angle of from 85° to 20°.

2. The laminate (1) of claim 1, wherein the paint coating (3) has a coating thickness of less than 120 microns, preferably of less than 80 microns, more preferably of between 60 microns and 80 microns.

3. The laminate (1) of any of the preceding claims, wherein the paint coating (3) comprises at least an inner paint layer paint (31) and an outer clearcoat layer (32), wherein preferably the outer clearcoat-layer (32) is a UV blocking layer.

4. The laminate (1) of claim 3, wherein the inner paint layer (31) comprises a pigment, and/or wherein the adhesive (4) is an acrylic adhesive (4).

5. The laminate (1) of any of the preceding claims, wherein the facet is angled from the front surface (22) at an angle of from 80° to 40°, more preferably from 75° to 55°.

6. The laminate (1) of any of the preceding claims, wherein the laminate (1) comprises a peripheral edge, having a peripheral thickness, said peripheral thickness being greater than a more central thickness of a central part of the laminate (1), wherein preferably said peripheral thickness is at most 30% greater, more preferably at most 20% greater, even more preferably at most 10% greater than the central thickness.

7. The laminate (1) of any of the preceding claims, wherein the polymer film (2) has a thickness of less than 45 microns, preferably of less than 40 microns, more preferably of less than 35 microns, still more preferably of 30 microns.

8. A method of producing a laminate (1) for repairing and/or protecting a surface (10) of an object, the method comprising the steps of:
a) providing a polymer film (2) having a rear surface (21), and a front surface (22);
b) applying an adhesive (4) to the rear surface (21);
c) applying a paint coating (3) to the front surface (22) of the polymer film (2); and
d) die-cutting the polymer film (2) with the adhesive (4) and the paint coating (3) thereon;
**characterized in that** the step of die-cutting the polymer film (2) is performed using a die (5) having a cross-sectional area defining a cutting angle (501) from 50° to 85°.

9. The method of claim 8, wherein the step of applying the paint coating (3) comprises spray coating the paint , preferably while a normal vector of the polymer film (2) defines an angle with respect to the direction of gravity of between 10° and 80°, more preferably at an angle of between 20° and 50°, even more preferably at an angle of between 30° and 40°, and/or wherein the polymer film (2) has a thickness of less than 50 microns, preferably of less than 40 microns, more preferably of less than 35 microns.

10. The method of claims 8 or 9, wherein the step of die-cutting the die (5) has a cross-sectional area defining a cutting angle (501) from 60° to 80°, more preferably from 65° to 75°, even more preferably of 70°.

11. The method of any of claims 8 to 10, wherein the step of die-cutting the polymer film (2) is performed by feeding the polymer film (2) past a roller, the roller having a die-sheet disposed around it, wherein the die sheet comprises protrusions thereon, defining the shapes to be cut into the laminate (1).

12. A method of applying a laminate (1) to the surface (10) of an object, comprising the steps of:
providing a laminate in accordance with any of claims 1 to 7; and applying the rear surface (21) with adhesive (4) to the object surface (10), preferably wherein the laminate (1) is applied to a damaged area (11) of the object surface (10),
preferably wherein the object is a vehicle, more preferably wherein the object is an automobile, a bike, a motorbike, a boat, or a truck.

13. The method of claim 12, wherein the colour of the laminate (1) and the colour of the object surface (10) have a ΔE*_{CMC} difference of no more than 1.8, preferably of no more than 1.2, more preferably of no more than 0.6, and/or wherein the colour of the laminate (1) and the colour of the object surface (10) have a ΔE*_{WADE} difference of no more than 2.8, preferably of no more than 2.0, more preferably of no more than 1.4, wherein both colour differences are measured according to the description.

14. A kit comprising:
a carrier-substrate (6), preferably a polymer backing (2); and
one or more laminates (1) in accordance with any of claims 1 to 7, releasably held upon the substrate, preferably wherein an array of laminates (1) in accordance with any of claims 1 to 7 is releasably held upon the substrate, and preferably wherein at least two of the laminates (1) differ in size and/or shape.

## Patentansprüche

1. Laminat (1) zum Reparieren und/oder Schützen einer Oberfläche (10) eines Objekts (10), umfassend:
einen Polymerfilm (2) mit einer Rückfläche (21) und einer Vorderfläche (22), wobei die Rückfläche (21) mit einem Klebstoff (4) versehen ist; und
die Vorderfläche (22) mit einer Lackbeschichtung (3) versehen ist;
wobei der Polymerfilm (2) eine Filmdicke von weniger als 50 Mikron aufweist;
**dadurch gekennzeichnet, dass** das Laminat (1) eine Umfangskante umfasst, wobei die Umfangskante eine Facette umfasst, die von der Vorderfläche (22) in einem Winkel von 85° bis 20° abgewinkelt ist.

2. Laminat (1) nach Anspruch 1, wobei die Lackbeschichtung (3) eine Beschichtungsdicke von weniger als 120 Mikron, vorzugsweise von weniger als 80 Mikron, mehr bevorzugt zwischen 60 Mikron und 80 Mikron aufweist.

3. Laminat (1) nach einem der vorhergehenden Ansprüche, wobei die Lackbeschichtung (3) mindestens einen inneren Lackschichtlack (31) und eine äußere Klarlackschicht (32) umfasst, wobei vorzugsweise die äußere Klarlackschicht (32) eine UV-Sperrschicht ist.

4. Laminat (1) nach Anspruch 3, wobei die innere Lackschicht (31) ein Pigment umfasst, und/oder wobei der Klebstoff (4) ein Acrylklebstoff (4) ist.

5. Laminat (1) nach einem der vorhergehenden Ansprüche, wobei die Facette von der Vorderfläche (22) in einem Winkel von 80° bis 40°, mehr bevorzugt von 75° bis 55° abgewinkelt ist.

6. Laminat (1) nach einem der vorhergehenden Ansprüche, wobei das Laminat (1) eine Umfangskante mit einer Umfangsdicke umfasst, wobei die Umfangsdicke größer als eine zentralere Dicke eines zentralen Teils des Laminats (1) ist, wobei vorzugsweise die Umfangsdicke um höchstens 30 % größer, mehr bevorzugt höchstens 20 % größer, noch mehr bevorzugt höchstens 10 % größer als die zentrale Dicke ist.

7. Laminat (1) nach einem der vorhergehenden Ansprüche, wobei der Polymerfilm (2) eine Dicke von weniger als 45 Mikron, vorzugsweise von weniger als 40 Mikron, mehr bevorzugt von weniger als 35 Mikron, noch mehr bevorzugt von 30 Mikron aufweist.

8. Verfahren zum Produzieren eines Laminats (1) zum Reparieren und/oder Schützen einer Oberfläche (10) eines Objekts, wobei das Verfahren die Schritte umfasst:
a) Bereitstellen eines Polymerfilms (2) mit einer Rückfläche (21) und einer Vorderfläche (22);
b) Aufbringen eines Klebstoffs (4) auf die Rückfläche (21);
c) Aufbringen einer Lackbeschichtung (3) auf die Vorderfläche (22) des Polymerfilms (2); und
d) Stanzen des Polymerfilms (2) mit dem Klebstoff (4) und der Lackbeschichtung (3) darauf; **dadurch gekennzeichnet, dass** der Schritt des Stanzens des Polymerfilms (2) unter Verwendung einer Stanze (5) mit einer Querschnittsfläche, die einen Schneidwinkel (501) von 50° bis 85° definiert, durchgeführt wird.

9. Verfahren nach Anspruch 8, wobei der Schritt des Aufbringens der Lackbeschichtung (3) ein Sprühbeschichten des Lacks umfasst, vorzugsweise während ein Normalenvektor des Polymerfilms (2) einen Winkel in Bezug auf die Schwerkraftrichtung zwischen 10° und 80°, mehr bevorzugt in einem Winkel zwischen 20° und 50°, noch mehr bevorzugt in einem Winkel zwischen 30° und 40° definiert, und/oder wobei der Polymerfilm (2) eine Dicke von weniger als 50 Mikron, vorzugsweise von weniger als 40 Mikron, mehr bevorzugt von weniger als 35 Mikron aufweist.

10. Verfahren nach den Ansprüchen 8 oder 9, wobei in dem Schritt des Stanzens die Stanze (5) eine Querschnittsfläche aufweist, die einen Schneidwinkel (501) von 60° bis 80°, mehr bevorzugt von 65° bis 75°, noch mehr bevorzugt von 70° definiert.

11. Verfahren nach einem der Ansprüche 8 bis 10, wobei in dem Schritt des Stanzens der Polymerfilm (2) durch Zuführen des Polymerfilms (2) an einer Walze vorbei durchgeführt wird, wobei die Walze ein Stanzblech aufweist, das um sie angeordnet ist, wobei das Stanzblech Vorsprünge darauf umfasst, die die in das Laminat (1) zu schneidenden Formen definieren.

12. Verfahren zum Aufbringen eines Laminats (1) auf die Oberfläche (10) eines Objekts, umfassend die Schritte:
Bereitstellen eines Laminats nach einem der Ansprüche 1 bis 7; und
Aufbringen der Rückfläche (21) mit Klebstoff (4) auf die Objektoberfläche (10), vorzugsweise wobei das Laminat (1) auf eine beschädigte Fläche **(11)** der Objektoberfläche (10) aufgebracht wird,
vorzugsweise wobei das Objekt ein Fahrzeug ist, mehr bevorzugt wobei das Objekt ein Kraftfahrzeug, ein Fahrrad, ein Motorrad, ein Boot oder ein Lastkraftwagen ist.

13. Verfahren nach Anspruch 12, wobei die Farbe des Laminats (1) und die Farbe der Objektoberfläche (10) eine ΔE*_{CMC}-Differenz von nicht mehr als 1,8, vorzugsweise von nicht mehr als 1,2, mehr bevorzugt von nicht mehr als 0,6 aufweisen, und/oder wobei die Farbe des Laminats (1) und die Farbe der Objektoberfläche (10) eine ΔE*_{WADE}-Differenz von nicht mehr als 2,8, vorzugsweise von nicht mehr als 2,0, mehr bevorzugt von nicht mehr als 1,4 aufweisen, wobei beide Farbdifferenzen gemäß der Beschreibung gemessen werden.

14. Kit, umfassend:
ein Trägersubstrat (6), vorzugsweise ein Polymerträger (2); und
ein oder mehrere Laminate (1) nach einem der Ansprüche 1 bis 7, die ablösbar auf dem Substrat gehalten werden, vorzugsweise wobei eine Anordnung von Laminaten (1) nach einem der Ansprüche 1 bis 7 ablösbar auf dem Substrat gehalten wird, und vorzugsweise wobei sich mindestens zwei der Laminate (1) in Bezug auf Größe und/oder Form unterscheiden.

## Revendications

1. Stratifié (1) pour réparer et/ou protéger une surface (10) d'un objet (10), comprenant :
un film polymère (2) comportant une surface arrière (21) et une surface avant (22),
la surface arrière (21) étant pourvue d'un adhésif (4) ; et
la surface avant (22) étant pourvue d'un revêtement de peinture (3) ;
dans lequel le film polymère (2) a une épaisseur inférieure à 50 microns ;
**caractérisé en ce que** le stratifié (1) comprend un bord périphérique, le bord périphérique comprenant une facette inclinée par rapport à la surface avant (22) à un angle compris entre 85° et 20⁰.

2. Stratifié (1) selon la revendication 1, dans lequel le revêtement de peinture (3) a une épaisseur inférieure à 120 microns, de préférence inférieure à 80 microns, plus préférentiellement comprise entre 60 et 80 microns.

3. Stratifié (1) selon l'une quelconque des revendications précédentes, dans lequel le revêtement de peinture (3) comprend au moins une couche interne de peinture (31) et une couche externe de revêtement transparent (32), la couche externe de revêtement transparent (32) étant de préférence une couche bloquant les UV.

4. Stratifié (1) selon la revendication 3, dans lequel la couche interne de peinture (31) comprend un pigment, et/ou dans lequel l'adhésif (4) est un adhésif acrylique (4).

5. Stratifié (1) selon l'une quelconque des revendications précédentes, dans lequel la facette est inclinée depuis la surface avant (22) à un angle compris entre 80° et 40°, de préférence entre 75⁰ et 55⁰.

6. Stratifié (1) selon l'une quelconque des revendications précédentes, ledit stratifié (1) comprenant un bord périphérique ayant une épaisseur périphérique, ladite épaisseur périphérique étant supérieure à une épaisseur plus centrale d'une partie centrale du stratifié (1), ladite épaisseur périphérique étant de préférence au plus 30 % supérieure à l'épaisseur centrale, plus préférentiellement au plus 20 % supérieure, et plus préférentiellement encore au plus 10 % supérieure.

7. Stratifié (1) selon l'une quelconque des revendications précédentes, dans lequel le film polymère (2) a une épaisseur inférieure à 45 microns, de préférence inférieure à 40 microns, plus préférentiellement inférieure à 35 microns, et plus préférentiellement encore de 30 microns.

8. Procédé de production d'un stratifié (1) pour réparer et/ou protéger une surface (10) d'un objet, le procédé comprenant les étapes suivantes :
a) la fourniture d'un film polymère (2) comportant une surface arrière (21) et une surface avant (22) ;
b) l'application d'un adhésif (4) sur la surface arrière (21) ;
c) l'application d'un revêtement de peinture (3) sur la surface avant (22) du film polymère (2) ; et
d) la découpe à l'emporte-pièce du film polymère (2) pourvu de l'adhésif (4) et du revêtement de peinture (3) ;
**caractérisé en ce que** l'étape de découpe à l'emporte-pièce du film polymère (2) est réalisée à l'aide d'un emporte-pièce (5) dont la section transversale définit un angle de coupe (501) compris entre 50⁰ et 85⁰.

9. Procédé selon la revendication 8, dans lequel l'étape d'application du revêtement de peinture (3) comprend la pulvérisation de la peinture, de préférence lorsqu'un vecteur normal du film polymère (2) définit un angle par rapport à la direction de gravité compris entre 10° et 80°, plus préférentiellement entre 20° et 50⁰, et plus préférentiellement encore entre 30⁰ et 40⁰, et/ou dans lequel le film polymère (2) a une épaisseur inférieure à 50 microns, de préférence inférieure à 40 microns, plus préférentiellement inférieure à 35 microns.

10. Procédé selon la revendication 8 ou 9, dans lequel dans l'étape de découpe à l'emporte-pièce, l'emporte-pièce (5) présente une section transversale définissant un angle de coupe (501) compris entre 60° et 80°, de préférence entre 65⁰ et 75⁰, et plus préférentiellement de 70°.

11. Procédé selon l'une quelconque des revendications 8 à 10, dans lequel l'étape de découpe à l'emporte-pièce du film polymère (2) est réalisée en faisant passer le film polymère (2) devant un rouleau, ledit rouleau comportant une feuille de découpe disposée autour de lui, ladite feuille de découpe comportant des parties saillantes définissant les formes à découper dans le stratifié (1).

12. Procédé d'application d'un stratifié (1) sur la surface (10) d'un objet, comprenant les étapes suivantes :
la fourniture d'un stratifié selon l'une quelconque des revendications 1 à 7 ; et
l'application de la surface arrière (21) munie d'un adhésif (4) sur la surface de l'objet (10), le stratifié (1) étant de préférence appliqué sur une zone endommagée (11) de la surface de l'objet (10), l'objet étant de préférence un véhicule, plus préférentiellement une automobile, un vélo, une moto, un bateau ou un camion.

13. Procédé selon la revendication 12, dans lequel la couleur du stratifié (1) et la couleur de la surface de l'objet (10) ont une différence ΔE*_{CMC} d'au plus 1,8, de préférence d'au plus 1,2, plus préférentiellement d'au plus 0,6, et/ou dans lequel la couleur du stratifié (1) et la couleur de la surface de l'objet (10) ont une différence AE*_{WADE} d'au plus 2,8, de préférence d'au plus 2,0, plus préférentiellement d'au plus 1,4, les deux différences de couleur étant mesurées selon la description.

14. Kit comprenant :
un substrat support (6), de préférence un support polymère (2) ; et
un ou plusieurs stratifiés (1) selon l'une quelconque des revendications 1 à 7, maintenus de manière amovible sur le substrat, de préférence dans lequel un réseau de stratifiés (1) selon l'une quelconque des revendications 1 à 7 est maintenu de façon amovible sur le substrat, et de préférence dans lequel au moins deux des stratifiés (1) diffèrent par leur taille et/ou leur forme.
